# EUROPEAN PATENT APPLICATION

(11) **EP 4 403 515 A1**
(43) Date of publication of application: **24.07.2024**
(21) Application number: 23305075.6
(22) Date of filing: 23.01.2023
(51) Int. Cl.: C01B 3/04, C22B 7/00, C22B 26/12, H01M 6/52, H01M 10/54

(54) **PROCESS FOR CLEAN HYDROGEN PRODUCTION AND LITHIUM BATTERIES RECYCLING**

(71) Applicant: TOTALENERGIES ONETECH, 92400 Courbevoie (FR); SAFT, 92300 Levallois-Perret (FR)
(72) Inventor: AYME-PERROT, David, 92078 PARIS LA DEFENSE (FR); DUBOUIS, Nicolas, 92078 PARIS LA DEFENSE (FR); DOLLE, Mickaël, MONTRÉAL, H2V 2V5 (CA)
(74) Representative: Lavoix

(57) **Abstract**

The present application concerns a process for simultaneously recycling lithium-metal electrodes of batteries and clean producing dihydrogen by water hydrolysis.

## Description

The present invention concerns the field of clean energy, and more particularly a sustainable combined production of clean hydrogen together with lithium batteries recycling.

The need of Lithium-ion batteries has been ever growing over the last decade because of their good performance in energy and power. New upcoming generations of batteries will be based upon metallic lithium anode (instead of the classical graphite anode of Li-ion) to further increase performance in stored energy.

Some current commercial batteries already use lithium metal as anode. Among them, there are:
- primary batteries (meaning they are non-rechargeable) where metallic lithium anode is coupled with a liquid cathode (ex: Li-SOCl₂).
- or secondary batteries (rechargeable) where metallic Li anode is coupled with a LiFePO₄ cathode in presence of a solid polymer electrolyte based upon polyethylene oxide (PEO). One thus talks about all-solid-state battery technology.

Many developments are on the way to give rise to new generations of solid-state batteries with better performance, notably in terms of specific energy (Wh/kg), energy density (Wh/L) and power.

The all-solid-state batteries (ASSB) are expected to be the best alternative to traditional Lithium-ion batteries in terms of safety as flammable organic liquid electrolytes are replaced by solid electrolytes that tend to be thermally stable and non-flammable. Moreover, the absence of liquid allows for simplified battery packaging. This reduces dead weight in the cell and increases volumetric and gravimetric energy density. Moreover, one of the key advantages of the technology versus Li-ion batteries is that the solid-electrolyte allows to get a stable interface with lithium anode avoiding the dendrites formation over cycling, allowing the use of a high-capacity Li-metal anode thus promoting the energy density of the systems.

Therefore, high energy ASSB are expected to fulfill all the requirements for a large use in electric vehicles (EV) but also for stationary storage applications. A large industrial deployment of such batteries is expected to answer the future huge demands of electrical storage within the next decades.

Another, but not yet mature type of Li-metal anode-based batteries is using novel generation of liquid electrolytes such as superconcentrated electrolytes (i.e.) electrolytes in which the weight or volume of salt is greater than the one of the solvent, such as superconcentrated electrolytes (mixture of apolar solvent, polar solvent and Li-salt) and biphasic superconcentrated electrolytes.

Another less mature generation of Li-metal anode-based batteries uses a traditional Li-ion battery electrolyte where the Li-metal has been coated with a polymer or an artificial "solid-electrolyte interphase" (LiF, Li-carbonates, etc).

Other less mature generation of Li-metal anode-based battery use an organic or aqueous electrolyte but gas-diffusion layer in contact with oxygen for the anode, or sulfur anodes instead of an intercalation material. Those batteries are named Li-air/Li-O₂ and Lithium-sulfur, respectively.

Also, Li-metal batteries may also comprise liquefied gas electrolytes.

In the view of the energy transition, the growing demand of specific metals for the development of all "green technologies" (photovoltaic panels, wind turbines, batteries, electrolyzers, etc) is going to create strong supply chain tensions. This requires anticipating the recyclability of the different products to avoid dramatic shortages.

Considering the limited lithium resources, the recycling of lithium is becoming a key challenge to be addressed to be able to answer the growing demands in Li-based batteries for electrical vehicles and stationary applications for forthcoming decades.

In this context, the recyclability of lithium from the lithium metal anode-based batteries and notably from all-solid-state-batteries will constitute a major stake.

On the other hand, great efforts are involved as part of the energy transition to reduce the carbon footprint of the energy mix.

Clean hydrogen is considered as a key game changer in the energy transition to manage to drastically reduce the CO₂ emissions, as it will be used either as feedstock for chemistry, notably to tackle the hard-to-abate sectors and as an energy vector. Indeed, in a future where electrical energy will be massive and driven by intermittency, clean hydrogen (H₂) constitutes a solution to store and transport huge amount of energy.

Today hydrogen is largely produced by steam methane reforming (SMR) leading to the release of large amounts of CO₂ (grey hydrogen). As CO₂ emissions are to be drastically reduced, cleaner approaches than SMR are expected to be competitive in a near future.

One approach typically consists in capturing and storing the CO₂ generated by SMR, which leads to a cleaner hydrogen (blue hydrogen).

Another common approach to produce hydrogen is by water electrolysis which was invented 200 years ago. Even if water electrolysis was largely developed during the 20th century, the quantity of hydrogen produced by this route remains very low as it represents a mere 4% of the world H₂ production, compared to grey hydrogen (96% of the world H₂ production). Nevertheless, the technology is about to spread quickly due to the large deployment of large renewables power sources such as solar (photovoltaic) or wind sources, that will be used to power large electrolyzer plants. The development of this green hydrogen will be made possible in particular with the reduction of the electrolyzer costs (CAPEX) and an affordable electricity cost (OPEX).

Two electrolysis technologies are considered today as mature: the alkaline electrolysis (ALK) and polymer electrolyte membrane (PEM) electrolysis.

Alkaline electrolysis is based upon KOH as electrolyte, the separator being a polysulfone/zirconia composite membrane and electrodes are based upon nickel and nickel alloys.

The reactions occurring at the electrodes are:
A reduction at the cathode:

   2 H₂O(*l*) + 2e⁻ → H₂(*g*) + 2 OH⁻(*aq*)
An oxidation at the anode:

   2 OH⁻(*aq*) → 1/2 O₂(*g*) + H₂O(*l*) + 2 e⁻

In the PEM electrolysis, a proton exchange membrane (typically Nafion^{®}) is coupled with a platinum hydrogen evolution reaction (HER) electrode and an iridium-based oxygen evolution reaction (OER) electrode.

The reactions occurring at the electrodes are:
A reduction at the cathode:

   2 H⁺(aq*)* + 2e⁻ → H₂(g)
An oxidation at the anode:

   2 H₂O(*l*) → O₂(*g*) + 4 H⁺(*aq*) + 4e⁻

Still, the yield of water electrolysis remains limited. Typically, the energy required by the best electrolyzer stacks ranges from 50 to 60 kWh/kg of H₂ which leads to 52,5 to 65 kWh/kg H₂ for the whole system (stacks + balance of plant). This means that the energy efficiency of electrolyzer systems ranges from 60 to 75% versus HHV (high heating value) of hydrogen. The rest of the incoming electrical energy is lost as heat.

That is why important research activities are ongoing to keep on improving the performance of the electrolyzers. Nevertheless, on such mature technologies, where catalysts have been developed and optimized from several decades, only few incremental optimizations can be expected.

In this context, finding new ways to efficiently produce a clean and cheap hydrogen constitutes a huge challenge. Producing hydrogen (H₂) by water hydrolysis via a spontaneous chemical reaction, thus avoiding the use of electrical energy, would be a key development to minimize its cost of production.

This invention proposes a process that allows recycling of Li metal from Li metal based batteries while simultaneously producing H₂ giving rise to a mutual benefit for both technologies.

### Description of the invention

With the aim of building a circular economy, the invention concerns a chemical process comprising recycling metallic lithium coming from Li-metal batteries electrodes by converting it into a Li salt and simultaneously generating hydrogen and heat, while generating few waste.

According to a first object, the present invention thus concerns a process for recycling lithium-metal electrodes of batteries and clean producing dihydrogen, said process comprising
reacting said electrodes with water in a reactor; and
collecting dihydrogen that is formed.

"Batteries" as considered herein refers to any batteries including Li-metal, in particular batteries including Li-metal containing electrodes, such as Li-metal containing anodes. These include in particular primary (ie) non-rechargeable lithium batteries (primary lithium batteries) or rechargeable (secondary) lithium batteries such as all-solid-state batteries (ASSB), liquefied gas electrolytes batteries, as well as superconcentrated electrolytes Li-metal batteries, batteries containing a Li-metal coated with a polymer or an artificial "solid-electrolyte interphase", and Li-air and Lithium-sulfur batteries.

Recycling lithium metal electrodes generally encompasses the use of used electrodes comprising lithium as a starting product of the process of the invention.

More particularly, it aims at regenerating the lithium metal included in these used electrodes.

Clean energy typically refers to energy that does not release greenhouses gases (GHG). Green energy generally defines a clean energy that is further produced by renewable resources.

As used above and below, "hydrogen" or "dihydrogen" may be used interchangeably and refers to the gas of formula H₂.

Clean production of hydrogen as used herein refers to the production of hydrogen giving rise to low GHG emission. It may also be considered as a way to produce hydrogen a sustainable way, as it makes uses of a used recycled product (used lithium electrodes) and water as considered as a renewable resource.

More particularly, the clean production according to the invention refers to the production of hydrogen by hydrolysis of water.

The process of the invention typically includes the steps of
reacting said electrodes with water in a reactor; and
collecting dihydrogen that is formed.

The reaction involved by the process of the invention may typically involve the following reactional scheme (I):

2 Li + 4 H₂O(l)→ H₂(g) + 2 LiOH.H₂O (s) (I)

More particularly, when contacted with water, Li-metal gives rise to a spontaneous reaction, where:
- water is reduced by Li metal which generates H₂ and liberates OH- ions according to the half reaction (I-1):

   2 H₂O(*l*) + 2e⁻ → H₂(*g*) + 2 OH⁻(*aq*) (I-1)
- lithium-metal is oxidized in Li⁺ according to the following half reaction (I-2):

   Li (*s*) → Li⁺ + e⁻

Typically, the above reactions may be advantageously performed in an inert atmosphere, such as under H₂, Ar or N₂, it being understood that if appropriate (e.g. in the case of N₂), the contact of such gas with Li may have to be prevented

During the process, Li-metal may dissolve in water giving rise to the formation of an aqueous solution of LiOH (that can precipitate if saturation is reached during the reaction), with simultaneous formation of hydrogen. LiOH.H2O may then be fully recovered after a subsequent evaporation step. As a whole, Li-metal is thus converted into its LiOH.H₂O (hydrated lithium hydroxide), with formation of hydrogen.

According to an embodiment, the reactor may typically be a closed reactor to allow formation of pressurized dihydrogen.

As a result, stages of compression via a mechanical compressor can be avoided so as to allow easy storage or transport pressurized hydrogen.

Alternatively, if the reactional mixture is acidic (pH<7), additional Li salt(s) may be formed alongside LiOH. The nature of the additional salt(s) depends on the nature of the acid that may be present:
For example, if sulfuric acid is present, Li₂SO₄ may be formed, according to the reaction (II):

8Li + 5H₂SO₄(aq) → 4Li₂SO₄.xH₂O + H₂S + 4H₂O (II)

In case diluted sulfuric acid is present, lithium may react to form hydrated lithium sulfate and hydrogen, according to reaction (III):

2Li + H₂SO₄(aq) → Li₂SO₄.xH₂O + H₂ (III)

In the presence of hydrochloric acid, hydrated LiCI may be formed according to reaction (IV):

2Li + 2HCl(aq) → 2LiCl.xH₂O + H₂ (IV)

In the presence of such acids in acidic reactional mixture, one or more of these reactions (II), (III), (IV) may take place, typically in a complex manner such as in a competitive manner with and in addition to reaction (I) above.

### Reaction (I) is very exothermic: ΔH= -222 kJ/mol Li

To avoid safety issues during the synthesis, the large amount of heat released during the reaction is preferably removed. Thus, according to an embodiment, the process also includes the thermal regulation of the reactor.

Additionally, the process may advantageously collect the heat that is generated by said reaction. This heat can potentially be valorized for other processes requiring calories or for feeding heating loops.

According to an embodiment, due to the reactivity of Li with air and particularly O₂, the reacting step is conducted in absence of air, under an inert atmosphere, such as under H₂, Ar, or under vacuum, and/or with prior inerting from Air/O₂ of the reactor.

The process may be conducted on full lithium containing electrodes or parts thereof. Therefore, the process may comprise one or more preliminary step of separating the lithium containing electrodes from the batteries.

Typically, said preliminary step may include disassembling batteries cells comprising at least one lithium-metal containing electrode and collecting said lithium-metal containing electrodes. This may for example include separating the lithium electrode from the other parts of the electrochemical elements, by dismantling the lithium metal anode-based battery packs and cells. The collected electrodes may thus constitute a crude electrodes mixture.

Following the preliminary step(s), the process may also comprise one or more preparatory steps on the crude electrode or electrode mixture, so as to form a refined electrode or refined electrodes mixture. Typically, the preparatory steps are carried out to improve the reactivity of the crude electrode or crude electrodes mixture.

Preparatory steps may include the enrichment of the lithium, the reactivity of the refined electrodes mixture.

Typically, the process may comprise one or more preparatory steps conducted on the crude lithium electrodes prior to the reacting step, said preparatory step being chosen from thermal treatments, mechanical treatments and chemical treatments of the crude electrodes mixture, such as thermal decomposition, shredding, delamination and/or acidic and/or alkaline treatments.

The process may be conducted while side products are present alongside lithium metal as Li metal is by far, the chemical element that is the most reactive with water.

Thus, impurities originating from the batteries components may still be present in the reactional mixture.

Typically, the process may further include one or more steps to isolate the lithium salt LiOH.H₂O that is formed. According to an embodiment, the process further comprises the step of precipitating the lithium salt LiOH. H₂O that is formed; and the step of purifying said salt.

The precipitation may be readily achieved by concentration of the reactional mixture, for example by evaporation of water.

The purification step may be typically conducted by usual work out, including one or more of filtration, evaporation and recrystallization of LiOH.H₂O.

The number and types of purification steps will depend on the full recycling process and the presence of existing soluble impurities coming from other battery components: cathode, salts, interfacial products (LiF,...). Typically, a chemical separation step to recover and/or purify Li from these impurities may be envisaged.

Following the process of the invention, LiOH.H₂O may be valorized as a source of lithium. For example, it can then be transformed and reintegrated in the battery supply chain.

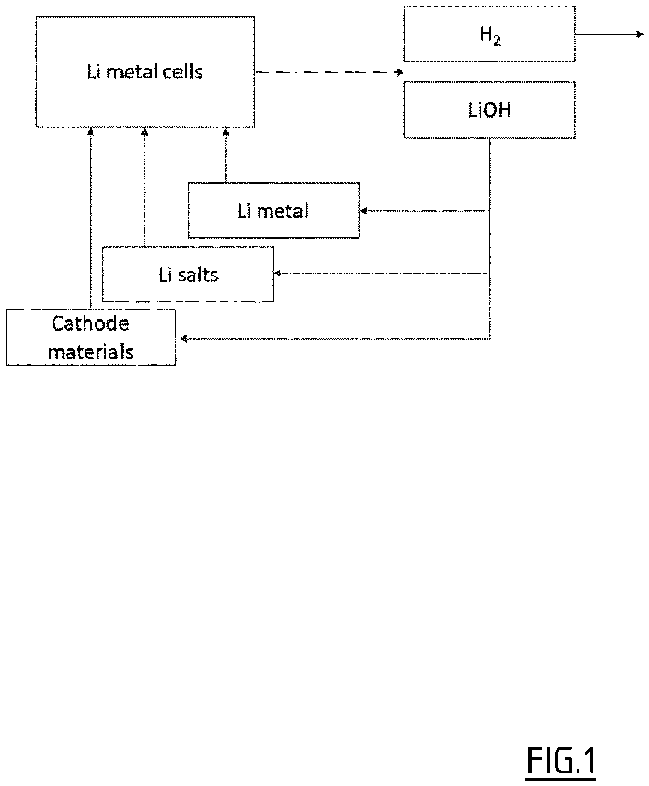

As illustrated in Figure 1, LiOH can be reused as a raw material for the synthesis of:
- cathodic electrode materials for ASSB and Li-ion batteries
- Li salt used in classical liquid electrolytes for Li-ion batteries
- Li metal by physical/chemical or electrochemical processes, as lithium can also be readily regenerated from the salt, for example by electrolytic deposition of LiCI in an adapted solvent after recovering LiCI from treatment of LiOH with HCl.

According to an embodiment, LiOH that is formed may also be reacted with an acid to form the corresponding acid addition salt, together with heat.

Such acid addition salts that may be formed include: Li₂SO₄, LiCI.

The present invention may be further understood with reference to the following figures and examples given for illustrative purposes.

### Figures

Figure 1 illustrates the valorization chain of LiOH salts in the battery supply chain.
Figure 2 is a X ray powder diffractogram of the product obtained in example 1.

### Examples

### Example 1

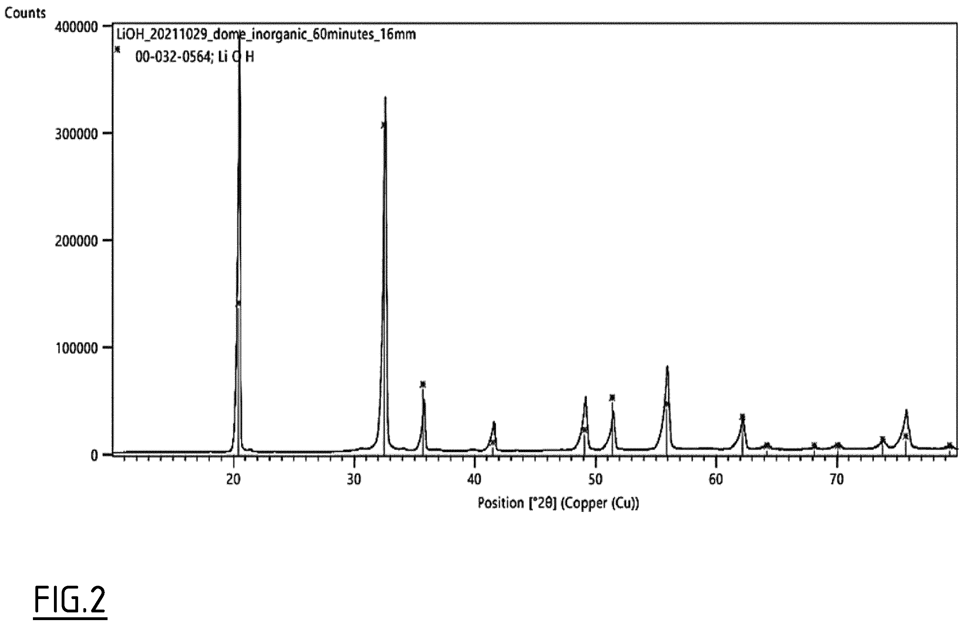

A piece of Li foil (Alfa Aesar, 99%) was dropped in water (pH = 6.5). The spontaneous reaction led to the formation of H₂ evacuated in the hood and a white precipitate at the bottom of the beaker. After complete reaction of the Li metal, the precipitate was filtered and dried overnight at 80°C under vacuum. The X-Ray powder diffractogram (Figure 2) clearly demonstrates the formation of LiOH.

### Example 2

A 1GWh factory making only NMC811/Li cells of 102Ah (377Wh) with double-sided 20 µm-thick Li foil on copper would represents 2,65 million cells per year. This approximately corresponds to 70 tons of Li metal in the absence of production loss.

Should the whole amount of the Li produced in 1 hour by such a GW plant be recycled, based on equation (I):

2 Li + 4 H₂O(*l*)→ H₂(*g*) + 2 LiOH.H₂O(*s*) (I)

the production can be estimated to 123000 m³ of H₂ based on the perfect gas law at 20°C under 1 bar (molar volume = 24,055 L.mol⁻¹).

Reported to a daily basis, those 70 tons of Li represent roughly 200 kg Li per day which would lead after treatment to roughly 28 kg H₂/day.

If those 70 tons of Li were to be recycled within one day, this represents roughly 5000m³/h H₂ meaning 400kg/h H₂ during 24h.

Such flows of hydrogen can be safely obtained thanks to an optimal reactor design in terms of heat exchange to be able to efficiently remove the whole of the reaction heat.

## Claims

1. Process for recycling lithium-metal electrodes of batteries and clean producing dihydrogen, said process comprising:
- reacting said electrodes with water in a reactor; and
- collecting dihydrogen that is formed.

2. The process according to claim 1 wherein the electrodes are Li-metal based anodes of primary lithium batteries or secondary lithium batteries, typically all-solid-state batteries.

3. The process according to claim 1 or 2 wherein the reacting step is conducted under an inert atmosphere.

4. The process according to claim 1 or 2 wherein the reacting step is conducted under an inert atmosphere or under vacuum.

5. The process according to anyone of the preceding claims wherein the reactor is a closed reactor to allow formation of pressurized dihydrogen.

6. The process according to anyone of the preceding claims further comprising one or more preparatory steps prior to the reacting step, said preparatory step being chosen from disassembling, thermal treatments, mechanical treatments and chemical treatments of the electrodes, such as thermal decomposition, shredding, delamination and/or acidic and/or alkaline treatments.

7. The process according to claim 6 further comprising one or more preliminary steps prior to the preparatory steps, said preliminary step being chosen from disassembling batteries cells comprising at least one lithium-metal containing electrode and collecting said lithium-metal containing electrode.

8. The process according to anyone of the preceding claims comprising the formation of dihydrogen according to the following reaction :
2 Li + 4 H₂O(l)→ H₂(g) + 2 LiOH.H₂O (s)

9. The process according to anyone of the preceding claims further comprising:
Thermal regulation of the reactor;
Collection of the heat that is generated by said reaction.

10. The process according to anyone of the preceding claims further comprising precipitating the lithium salt LiOH.H₂O that is formed; and
purifying said salt.

11. The process according to claim 10 wherein the purification step includes filtration, evaporation and recrystallization of LiOH.H₂O.
